# EUROPÄISCHE PATENTSCHRIFT

(11) **EP 2 532 800 B1**
(45) Veröffentlichungstag und Bekanntmachung des Hinweises auf die Patenterteilung: **22.05.2019**
(21) Anmeldenummer: 12168783.4
(22) Anmeldetag: 22.05.2012
(51) Int. Cl.: E04D 3/36

(54) **Befestigungsvorrichtung**
Attachment device
Dispositif de fixation

(30) Priorität: 06.06.2011 DE 102011076967
(43) Veröffentlichungstag der Anmeldung: 12.12.2012
(73) Patentinhaber: HILTI Aktiengesellschaft, 9494 Schaan (LI)
(72) Erfinder: Baudy, Daniel, 6800 Feldkirch (AT)
(74) Vertreter: Hilti Aktiengesellschaft Corporate Intellectual Property

(56) Entgegenhaltungen:
- DE-U1- 20 021 311
- DE-U1-202006 019 303
- DE-U1-202009 007 096
- US-B1- 6 308 483

## Beschreibung

Die vorliegende Erfindung betrifft eine Vorrichtung zur Befestigung eines ersten Gegenstands an einem zweiten Gegenstand in einer Befestigungsrichtung.

Derartige Vorrichtungen umfassen häufig ein Widerlager zur Abstützung des ersten Gegenstands in der Befestigungsrichtung, wobei das Widerlager eine Anlagefläche für eine Anlage des Widerlagers an dem ersten Gegenstand aufweist. Aus der US 6 308 483 B1, der DE 20 2006 019 303 U1, der DE 20 2009 007 096 U1 und der DE 200 21 311 U1 sind Vorrichtungen bekannt, bei denen von der Anlagefläche in der Befestigungsrichtung Noppen abragen. Der Erfindung liegt die Aufgabe zu Grunde, eine gattungsgemässe Vorrichtung zur Verfügung zu stellen, mit der eine Abstützung des ersten Gegenstands quer zur Befestigungsrichtung verbessert ist.

Die Aufgabe wird bei einer Vorrichtung zur Befestigung eines ersten Gegenstands an einem zweiten Gegenstand in einer Befestigungsrichtung, mit einem Widerlager zur Abstützung des ersten Gegenstands in der Befestigungsrichtung, wobei das Widerlager eine Anlagefläche für eine Anlage des Widerlagers an dem ersten Gegenstand aufweist, durch ein Stützelement, wie Stützkörper, zur Abstützung des ersten Gegenstands quer zur Befestigungsrichtung gelöst, wobei das Stützelement gegenüber der Befestigungsrichtung geneigt von der Anlagefläche abragt. Das Widerlager ist dabei bevorzugt als Kopf ausgebildet.

Eine bevorzugte Ausführungsform ist dadurch gekennzeichnet, dass das Stützelement gegenüber einer Flächennormalen der Anlagefläche geneigt von der Anlagefläche und geneigt gegenüber der Befestigungsrichtung abragt. Besonders bevorzugt weist die Flächennormale in Befestigungsrichtung.

Eine weitere bevorzugte Ausführungsform ist dadurch gekennzeichnet, dass das Stützelement in Richtung einer Flächennormalen der Anlagefläche von der Anlagefläche und geneigt gegenüber der Befestigungsrichtung abragt.

Eine bevorzugte Ausführungsform ist dadurch gekennzeichnet, dass die Vorrichtung weiterhin einen Schaft umfasst, welcher von dem Widerlager abragt. Besonders bevorzugt ragt der Schaft in Befestigungsrichtung von dem Widerlager ab.

Eine bevorzugte Ausführungsform ist dadurch gekennzeichnet, dass das Stützelement auf den Schaft zu und/oder von einem äusseren Rand des Widerlagers weg geneigt ist.

Eine bevorzugte Ausführungsform ist dadurch gekennzeichnet, dass die Anlagefläche im Wesentlichen eben ist. Eine alternative Ausführungsform ist dadurch gekennzeichnet, dass die Anlagefläche gewölbt ist. Besonders bevorzugt ist die Anlagefläche konkav gewölbt.

Eine bevorzugte Ausführungsform ist dadurch gekennzeichnet, dass ein Übergang von dem Widerlager zu dem Schaft kegelstumpfförmig ausgebildet ist. Besonders bevorzugt weist der Übergang mindestens drei in Befestigungsrichtung aufeinander folgende Kegelstümpfe auf, deren Mantellinien unterschiedliche Neigungswinkel zu einer Befestigungsebene aufweisen, die entgegen der Befestigungsrichtung immer kleiner werden. Die Befestigungsebene ist dabei senkrecht zur Befestigungsachse ausgerichtet. Bevorzugt ist der Neigungswinkel der Mantellinie eines Kegelstumpfs jeweils im Wesentlichen halb so gross wie der Neigungswinkel der Mantellinie des in Befestigungsrichtung benachbarten Kegelstumpfs.

Eine bevorzugte Ausführungsform ist dadurch gekennzeichnet, dass der Schaft an seinem dem Widerlager gegenüberliegenden Ende eine Spitze aufweist. Besonders bevorzugt ist die Spitze mit Verstärkungsrippen versehen.

Eine bevorzugte Ausführungsform ist dadurch gekennzeichnet, dass die Vorrichtung einen Durchbruch für ein Befestigungselement aufweist, durch den das Befestigungselement hindurchführbar ist. Besonders bevorzugt weist der Schaft einen solchen Durchbruch auf.

Eine bevorzugte Ausführungsform ist dadurch gekennzeichnet, dass die Vorrichtung eine Aufnahme für einen Kopf eines Befestigungselements aufweist. Besonders bevorzugt weist der Schaft eine solche Aufnahme auf. Gemäss einer besonders bevorzugten Ausführungsform weist die Aufnahme ein Gegenlager für einen Kopf des Befestigungselements auf.

Eine bevorzugte Ausführungsform ist dadurch gekennzeichnet, dass ein Übergang von dem Gegenlager zu der Aufnahme kegelstumpfförmig ausgebildet ist. Besonders bevorzugt weist der Übergang mindestens drei in Befestigungsrichtung aufeinander folgende Kegelstümpfe auf, deren Mantellinien unterschiedliche Neigungswinkel zur Befestigungsrichtung aufweisen, die entgegen der Befestigungsrichtung immer kleiner werden. Bevorzugt ist der Neigungswinkel der Mantellinie eines Kegelstumpfs jeweils im Wesentlichen halb so gross wie der Neigungswinkel der Mantellinie des in Befestigungsrichtung benachbarten Kegelstumpfs. Weiterhin bevorzugt weist das Gegenlager einen ebenen Bereich auf, welcher senkrecht zur Befestigungsrichtung ausgerichtet ist. Besonders bevorzugt schliesst sich der ebene Bereich radial innerhalb an den insbesondere kegelstumpfförmigen Übergangsbereich an.

Eine bevorzugte Ausführungsform ist dadurch gekennzeichnet, dass der Durchbruch oder die Aufnahme eine Drainageöffnung aufweist.

Eine bevorzugte Ausführungsform ist dadurch gekennzeichnet, dass die Anlagefläche in eine Ebene bringbar ist, gegebenenfalls durch Verformung während eines Befestigungsvorgangs, und wobei das Stützelement schräg zur Ebene von dem Widerlager abragt, wenn die Anlagefläche in die Ebene gebracht ist. Besonders bevorzugt ist die Ebene senkrecht zur Befestigungsrichtung orientiert. Gemäss einer bevorzugten Ausführungsform befindet sich die Anlagefläche bereits unverformt in einer solchen Ebene.

Eine bevorzugte Ausführungsform ist dadurch gekennzeichnet, dass das Stützelement einen Vorsprung umfasst. Besonders bevorzugt ist der Vorsprung noppenförmig ausgebildet. Eine bevorzugte Ausführungsform ist dadurch gekennzeichnet, dass das Stützelement eine kegelförmige Aussenfläche aufweist.

Die Erfindung wird im Folgenden unter Bezugnahme auf die Zeichnungen näher erläutert. Es zeigen:
- Fig. 1: eine Befestigungsvorrichtung in einer Seitenansicht,
- Fig. 2: eine Befestigungsvorrichtung in einer teilweisen Längsschnittansicht,
- Fig. 3: eine Befestigungsvorrichtung in einer Seitenansicht und
- Fig. 4: eine Befestigungsvorrichtung in einer Längsschnittansicht.

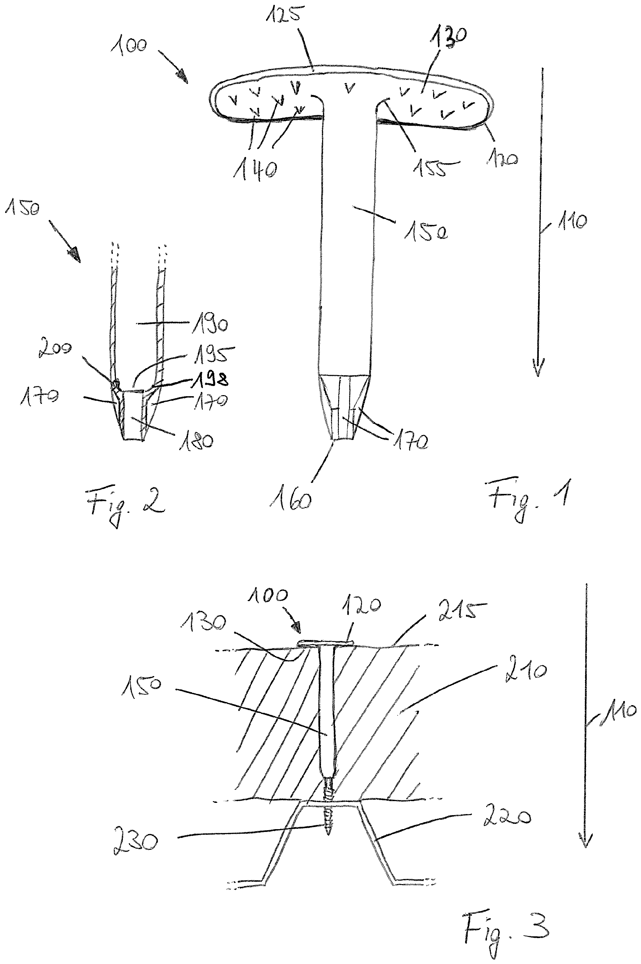

In Fig. 1 ist eine Vorrichtung 100 zur Befestigung eines nicht gezeigten ersten Gegenstands an einem ebenfalls nicht gezeigten zweiten Gegenstand in einer Seitenansicht dargestellt. Die Vorrichtung 100 wird grundsätzlich in einer Befestigungsrichtung 110 an einem Untergrund oder Ähnlichem befestigt. Sie weist dazu ein als Kopf 120 ausgebildetes Widerlager zur Abstützung des ersten Gegenstands in der Befestigungsrichtung auf, wobei der Kopf 120 seinerseits eine Anlagefläche 130 für eine Anlage des Kopfes 120 an dem ersten Gegenstand aufweist. Der Kopf 120 ist dabei sphärisch gekrümmt ausgebildet, so dass die Anlagefläche 130 konvex gewölbt ist. Bei nicht dargestellten Ausführungsbeispielen sind der Kopf und/oder die Anlagefläche eben ausgebildet.

Weiterhin umfasst die Vorrichtung 100 mehrere Stützelemente 140 zur Abstützung des ersten Gegenstands quer zur Befestigungsrichtung 110, welche gegenüber der Befestigungsrichtung 110 von einem Rand 125 des Kopfes 120 weg geneigt von der Anlagefläche 130 abragen. Die Stützelemente 140 sind als noppenförmige Vorsprünge ausgebildet und weisen jeweils eine im Wesentlichen kegelförmige Aussenfläche auf.

Im gezeigten Ausführungsbeispiel ragen die Stützelemente 140 auch gegenüber einer Flächennormalen der Anlagefläche 130, gemessen am Ort des jeweiligen Stützelementes 140, geneigt von der Anlagefläche 130 ab. Wegen der konkaven Wölbung der Anlagefläche 130 sind die Stützelemente in zweierlei Hinsicht gegenüber der Befestigungsrichtung 110 geneigt, nämlich einerseits durch die Neigung der Flächennormalen gegenüber der Befestigungsrichtung 110 und zusätzlich durch die Neigung der Stützelemente 140 gegenüber der Flächennormalen. Bei nicht dargestellten Ausführungsbeispielen weist die Flächennormale in Befestigungsrichtung oder die Stützelemente ragen senkrecht von der insbesondere gewölbten Anlagefläche ab, so dass immer noch eine Neigung gegenüber der Befestigungsrichtung verbleibt.

Weiterhin weist die Vorrichtung 100 einen Schaft 150, welcher in der Befestigungsrichtung 110 zentral von dem Kopf 120 abragt, so dass die Stützelemente 140 auf den Schaft zu geneigt sind. An seinem dem Kopf 120 gegenüberliegenden Ende weist der Schaft 150 eine Spitze 160 auf, welche mit Verstärkungsrippen 170 versehen ist. Der Übergang 155 von dem Kopf 120 zu dem Schaft 150 ist kegelstumpfförmig ausgebildet und weist drei in Befestigungsrichtung 110 aufeinanderfolgende Kegelstümpfe auf, deren Mantellinien unterschiedliche Neigungswinkel zu einer Befestigungsebene aufweisen, die entgegen der Befestigungsrichtung 110 immer kleiner werden. Die Befestigungsebene ist dabei senkrecht zur Befestigungsachse 110 ausgerichtet. Der Neigungswinkel der Mantellinie eines Kegelstumpfs ist jeweils im Wesentlichen halb so gross wie der Neigungswinkel der Mantellinie des in Befestigungsrichtung 110 benachbarten Kegelstumpfs. In Fig. 1 halbieren sich also die Neigungswinkel von jeweils einem Kegelstumpf zum nächsten von innen nach aussen. Aufgrund einer ausgerundeten Gestaltung des Übergangs 155 sind die einzelnen Kegelstümpfe in Fig. 1 nicht dargestellt.

In Fig. 2 ist ein Teil des Schaftes 150 in einem Längsschnitt dargestellt. Der Schaft 150 weist einen Durchbruch 180 auf, durch den ein nicht dargestelltes Befestigungselement wie beispielsweise eine Schraube oder einen Nagel hindurchführbar ist. Weiterhin weist der Schaft 150 eine Aufnahme 190 mit einem Gegenlager 195 für einen Kopf des nicht dargestellten Befestigungselements auf. Zur Abfuhr von eintretendem Wasser weist die Aufnahme 190 eine Drainageöffnung 200 auf. Ein Übergang 198 von dem Gegenlager 195 zur Aufnahme 190 ist kegelstumpfförmig ausgebildet und weist drei in Befestigungsrichtung 110 aufeinander folgende Kegelstümpfe auf, deren Mantellinien unterschiedliche Neigungswinkel zur Befestigungsrichtung 110 aufweisen, die entgegen der Befestigungsrichtung immer kleiner werden. Der Neigungswinkel der Mantellinie eines Kegelstumpfs ist jeweils halb so gross wie der Neigungswinkel der Mantellinie des in Befestigungsrichtung 110 benachbarten Kegelstumpfs. In Fig. 2 halbieren sich also die Neigungswinkel von jeweils einem Kegelstumpf zum nächsten von unten nach oben beziehungsweise entgegen der Befestigungsrichtung 110. Das Gegenlager 195 ist ebenfalls kegelstumpfförmig ausgebildet, wobei der Übergang 198 ausgerundet gestaltet ist, so dass die einzelnen Kegelstümpfe in Fig. 2 nicht erkennbar sind.

Der Durchbruch 180, die Aufnahme 190 und insbesondere der Schaft 150 weisen jeweils einen ausreichenden Durchmesser auf, um Schrauben mit verschiedenen Durchmessern zu verwenden. Bevorzugt sind Schrauben mit 6,7 mm Durchmesser und solche mit 4,8 mm Durchmesser in der Aufnahme verwendbar.

In Fig. 3 ist eine Isolationsplatte 210 im Querschnitt dargestellt, welche mittels der Vorrichtung 100 an einem Stahlblech 220 eines nicht weiter gezeigten Flachdaches eines Gebäudes befestigt ist und mit einer Schutzfolie 215 abgedeckt ist. Die Isolationsplatte 210 dient dabei einer thermischen Abschirmung des Gebäudes. Der Kopf 120 und der Schaft 150 der Vorrichtung 100 sind aus Kunststoff gefertigt, so dass sich durch eine Vielzahl von Vorrichtungen 100 keine übermässigen Wärmebrücken ausbilden. Die Schutzfolie 215 hält Wasser ab, so dass die Isolationsplatte im Wesentlichen trocken bleibt und ihre Isolationswirkung behält. Zur Abdichtung wird eine nicht gezeigte, zusätzliche Folie über die Vorrichtungen 100 geschweisst. Die Folie 215 erfährt bei Wind zusammen mit der übergeschweissten Folie eine Sogkraft, welche durch die Vorrichtungen 100 auf das Flachdach übertragen wird.

Neben dem Kopf 120 und dem Schaft 150 weist die Vorrichtung 100 ein als Schraube 230 ausgebildetes Befestigungselement auf. Die Schraube 230 liegt mit ihrem nicht gezeigten Kopf an dem in Fig. 2 dargestellten Gegenlager 195 an und ist in das Stahlblech 220 eingeschraubt. Zu diesem Zweck ist die Schraube 230 als Selbstbohrschraube ausgebildet. Ein gewindefreier Bereich 235 an der Schraube 230 lässt sich in den Durchbruch 180 hinein verschieben und bewirkt somit eine Art Teleskopfunktion der Vorrichtung 100, so dass eine Begehung des Flachdaches ermöglicht wird, ohne dass die Vorrichtung 100 durch die übergeschweisste Folie hindurchsticht.

Durch die Kräfte, welche beim Festschrauben der Schraube 230 auftreten, hat sich der Kopf 120 derart verformt, dass die Anlagefläche 130 in eine Ebene senkrecht zur Befestigungsrichtung 110 gebracht wurde. Der Anwender bekommt durch den insbesondere sphärisch gekrümmten Kopf direkt von der Vorrichtung eine optische Rückmeldung, wann die Vorrichtung ausreichend verspannt ist. Die in Fig. 3 nicht dargestellten Stützelemente ragen dennoch gegenüber der Flächennormalen der Anlagefläche 130 und somit gegenüber der Befestigungsrichtung 110 geneigt von der Anlagefläche 130 ab. Bei nicht gezeigten Ausführungsbeispielen befindet sich die Anlagefläche bereits unverformt in einer Ebene insbesondere senkrecht zur Befestigungsrichtung.

Die aufgrund ihrer Neigung ähnlich zu Widerhaken wirkenden Stützelemente 140 bohren sich in die Schutzfolie 215 und insbesondere in die Isolationsplatte 210 ein und verringern die Gefahr eines Verrutschens, insbesondere eines Überknöpfens der Schutzfolie. Da die Vorrichtung 100 hierdurch unter Umständen höhere Zugkräfte übertragen muss, sind der Übergang 155 sowie der Übergang 198 jeweils kegelstumpfförmig ausgebildet, was durch die versteifende Wirkung der Verstärkungsrippen 170 noch unterstützt wird.

Die Drainageöffnung 200 ermöglicht ein Abfliessen von gegebenenfalls vorhandenem Wasser in der Aufnahme 190 und verhindert dadurch ein Durchstechen eines sich ansonsten möglicherweise bildenden Eiszapfens durch die aufgeschweisste Folie bei Begehung des Flachdaches.

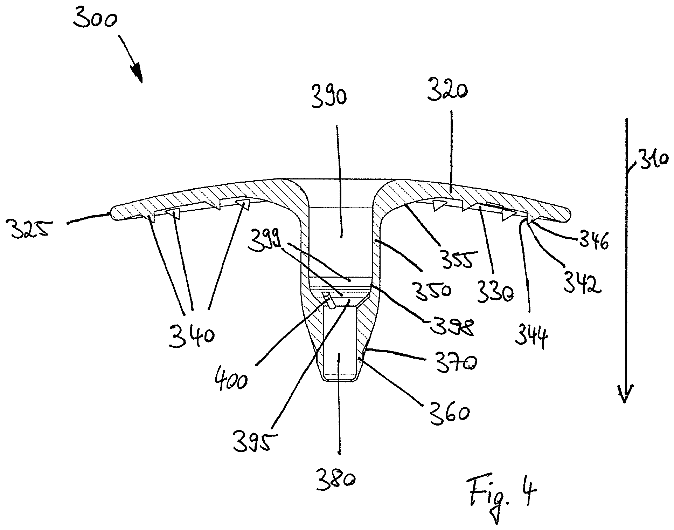

In Fig. 4 ist eine Vorrichtung 300 zur Befestigung eines nicht gezeigten ersten Gegenstands an einem ebenfalls nicht gezeigten zweiten Gegenstand in einem Längsschnitt dargestellt. Die Vorrichtung 300 wird grundsätzlich in einer Befestigungsrichtung 310 an einem Untergrund oder Ähnlichem befestigt. Sie weist dazu ein als Kopf 320 ausgebildetes Widerlager zur Abstützung des ersten Gegenstands in der Befestigungsrichtung auf, wobei der Kopf 320 seinerseits eine Anlagefläche 330 für eine Anlage des Kopfes 320 an dem ersten Gegenstand aufweist. Der Kopf 320 ist dabei sphärisch gekrümmt ausgebildet, so dass die Anlagefläche 330 konvex gewölbt ist.

Weiterhin umfasst die Vorrichtung 300 mehrere Stützelemente 340 zur Abstützung des ersten Gegenstands quer zur Befestigungsrichtung 310, welche gegenüber der Befestigungsrichtung 310 von einem Rand 325 des Kopfes 320 weg geneigt von der Anlagefläche 330 abragen. Die Stützelemente 340 sind als noppenförmige Vorsprünge ausgebildet und weisen insbesondere jeweils eine im Wesentlichen kegelförmige Aussenfläche 346 und eine Spitze 342 auf. Eine von dem Rand 325 weg weisende Innenflanke 344 jedes der Stützelemente 340 ist dabei bevorzugt parallel zur Befestigungsrichtung 310 ausgerichtet, so dass die Vorrichtung 300 insbesondere als Kunststoffteil einfach entformt werden kann. Im gezeigten Ausführungsbeispiel ragen die Stützelemente 340 auch gegenüber einer Flächennormalen der Anlagefläche 330, gemessen am Ort des jeweiligen Stützelementes 340, geneigt von der Anlagefläche 330 ab. Abgesehen von der Wölbung hat der Rand 325 eine ovale Form. Bei nicht dargestellten Ausführungsbeispielen weist der Rand eine Rechteck-, Ellipsen oder Kreisform auf.

Weiterhin weist die Vorrichtung 300 einen Schaft 350, welcher in der Befestigungsrichtung 310 zentral von dem Kopf 320 abragt, so dass die Stützelemente 340 auf den Schaft zu geneigt sind. An seinem dem Kopf 320 gegenüberliegenden Ende weist der Schaft 350 eine Spitze 360 auf, welche mit Verstärkungsrippen 370 versehen ist. Der Übergang 355 von dem Kopf 320 zu dem Schaft 350 ist kegelstumpfförmig ausgebildet und weist fünf in Befestigungsrichtung 310 aufeinanderfolgende Kegelstümpfe auf, deren Mantellinien unterschiedliche Neigungswinkel zu einer Befestigungsebene aufweisen, die entgegen der Befestigungsrichtung 310 immer kleiner werden. Die Befestigungsebene ist dabei senkrecht zur Befestigungsachse 310 ausgerichtet. Der Neigungswinkel der Mantellinie eines Kegelstumpfs ist jeweils im Wesentlichen halb so gross wie der Neigungswinkel der Mantellinie des in Befestigungsrichtung 310 benachbarten Kegelstumpfs. In Fig. 4 halbieren sich also die Neigungswinkel von jeweils einem Kegelstumpf zum nächsten von innen nach aussen. Aufgrund einer ausgerundeten Gestaltung des Übergangs 355 sind die einzelnen Kegelstümpfe in Fig. 1 nicht dargestellt.

Der Schaft 350 weist einen Durchbruch 380 auf, durch den ein nicht dargestelltes Befestigungselement wie beispielsweise eine Schraube oder einen Nagel hindurchführbar ist. Weiterhin weist der Schaft 350 eine Aufnahme 390 mit einem Gegenlager 395 für einen Kopf des nicht dargestellten Befestigungselements auf. Ein Übergang 398 von dem Gegenlager 395 zur Aufnahme 390 ist kegelstumpfförmig ausgebildet und weist vier in Befestigungsrichtung 310 aufeinander folgende Kegelstümpfe 399 auf, deren Mantellinien unterschiedliche Neigungswinkel zur Befestigungsrichtung 310 aufweisen, die entgegen der Befestigungsrichtung 310 immer kleiner werden. Der Neigungswinkel der Mantellinie eines Kegelstumpfs 399 ist jeweils halb so gross wie der Neigungswinkel der Mantellinie des in Befestigungsrichtung 310 benachbarten Kegelstumpfs 399. In Fig. 4 halbieren sich also die Neigungswinkel von jeweils einem Kegelstumpf 399 zum nächsten von unten nach oben beziehungsweise entgegen der Befestigungsrichtung 310. Das Gegenlager 395 ist dabei ebenfalls kegelstumpfförmig ausgebildet. Bei nicht dargestellten Ausführungsbeispielen ist das Gegenlager eben ausgebildet und insbesondere senkrecht zur Befestigungsrichtung ausgerichtet.

Zur Abfuhr von eintretendem Wasser weist die Aufnahme 390 einen Drainagekanal 400 auf. Eingetretenem Wasser in der Aufnahme 390 wird es dadurch unter Umständen ermöglicht, durch den Drainagekanal 400 an dem Kopf des Befestigungselements vorbei und durch den Durchbruch 380 an einem Schaft des Befestigungselements vorbei abgeführt zu werden. Der Drainagekanal 400 ist dabei nicht notwendigerweise als Durchbruch ausgebildet.

Die Erfindung wurde anhand einer Befestigungsvorrichtung für eine Isolationsplatte auf einem Flachdach beschrieben. Es wird jedoch darauf hingewiesen, dass die Erfindung auch anderweitig anwendbar ist.

## Patentansprüche

1. Vorrichtung zur Befestigung eines ersten Gegenstands an einem zweiten Gegenstand in einer Befestigungsrichtung, mit einem Widerlager (120) zur Abstützung des ersten Gegenstands in der Befestigungsrichtung, wobei das Widerlager (120) eine Anlagefläche (130) für eine Anlage des Widerlagers an dem ersten Gegenstand aufweist, und mit mindestens einem Stützkörper (140) zur Abstützung des ersten Gegenstands quer zur Befestigungsrichtung, wobei der mindestens eine Stützkörper (140) von der Anlagefläche (130) abragt, **dadurch gekennzeichnet dass** der mindestens eine Stützkörper (140) geneigt gegenüber der Befestigungsrichtung abragt.

2. Vorrichtung nach Anspruch 1, **dadurch gekennzeichnet, dass** der mindestens eine Stützkörper (140) gegenüber einer Flächennormalen der Anlagefläche (130) geneigt von der Anlagefläche (130) abragt.

3. Vorrichtung nach Anspruch 1, **dadurch gekennzeichnet, dass** der mindestens eine Stützkörper (140) in Richtung einer Flächennormalen der Anlagefläche (130) von der Anlagefläche (130) abragt.

4. Vorrichtung nach einem der vorhergehenden Ansprüche, **dadurch gekennzeichnet, dass** die Vorrichtung weiterhin einen Schaft umfasst, welcher insbesondere in Befestigungsrichtung von dem insbesondere als Kopf ausgebildeten Widerlager (120) abragt.

5. Vorrichtung nach einem der vorhergehenden Ansprüche, **dadurch gekennzeichnet, dass** der mindestens eine Stützkörper (140) auf den Schaft zu geneigt ist.

6. Vorrichtung nach einem der vorhergehenden Ansprüche, **dadurch gekennzeichnet, dass** der mindestens eine Stützkörper (140) von einem äusseren Rand des Widerlagers weg geneigt ist.

7. Vorrichtung nach einem der vorhergehenden Ansprüche, **dadurch gekennzeichnet, dass** die Anlagefläche (130) eben ist.

8. Vorrichtung nach einem der vorhergehenden Ansprüche, **dadurch gekennzeichnet, dass** die Anlagefläche (130) insbesondere konkav gewölbt ist.

9. Vorrichtung nach einem der vorhergehenden Ansprüche, **dadurch gekennzeichnet, dass** ein Übergang von dem Schaft zu dem Widerlager (120) kegelstumpfförmig ausgebildet ist.

10. Vorrichtung nach einem der vorhergehenden Ansprüche, **dadurch gekennzeichnet, dass** der Schaft an seinem dem Widerlager (120) gegenüberliegenden Ende eine insbesondere mit Verstärkungsrippen versehene Spitze aufweist.

11. Vorrichtung nach einem der vorhergehenden Ansprüche, **dadurch gekennzeichnet, dass** die Vorrichtung, insbesondere der Schaft, einen Durchbruch für ein Befestigungselement aufweist.

12. Vorrichtung nach einem der vorhergehenden Ansprüche, **dadurch gekennzeichnet, dass** die Vorrichtung, insbesondere der Schaft, eine Aufnahme für einen Kopf eines Befestigungselements aufweist.

13. Vorrichtung nach einem der vorhergehenden Ansprüche, **dadurch gekennzeichnet, dass** die Aufnahme ein Gegenlager für einen Kopf eines Befestigungselements aufweist.

14. Vorrichtung nach einem der vorhergehenden Ansprüche, **dadurch gekennzeichnet, dass** ein Übergang von dem Gegenlager zu der Aufnahme kegelstumpfförmig ausgebildet ist.

15. Vorrichtung nach einem der vorhergehenden Ansprüche, **dadurch gekennzeichnet, dass** der Durchbruch oder die Aufnahme eine Drainage, insbesondere eine Drainageöffnung und/oder einen Drainagekanal aufweist.

## Claims

1. Device for fastening a first object to a second object in a fastening direction, with an abutment (120) for supporting the first object in the fastening direction, in which the abutment (120) has a contact surface (130) for applying the abutment to the first object, and with at least one supporting body (140) for supporting the first object crosswise to the fastening direction, in which the at least one supporting body (140) projects from the contact surface (130), **characterised in that** the at least one supporting body (140) projects inclined in relation to the direction of fastening.

2. Device according to claim 1, **characterised in that** the at least one supporting body (140) projects from the contact surface (130) inclined in relation to a surface normal of the contact surface (130).

3. Device according to claim 1, **characterised in that** the at least one supporting body (140) projects from the contact suface (130) in the direction of a surface normal of the contact surface (130).

4. Device according to one of the previous claims, **characterised in that** the device also comprises a shaft, which projects from the abutment (120) made as a head in particular, particularly in the fastening direction.

5. Device according to one of the previous claims, **characterised in that** the at least one supporting body (140) is inclined towards the shaft.

6. Device according to one of the previous claims, **characterised in that** the at least one supporting body (140) is inclined away from an outer edge of the abutment.

7. Device according to one of the previous claims, **characterised in that** the contact surface (130) is flat.

8. Device according to one of the previous claims, **characterised in that** the contact surface (130) is curved concavely in particular.

9. Device according to one of the previous claims, **characterised in that** a transition from the shaft to the abutment (120) is made in the shape of a truncated cone.

10. Device according to one of the previous claims, **characterised in that** the shaft has a tip, provided with reinforcing ribs in particular, at its end opposite the abutment (120).

11. Device according to one of the previous claims, **characterised in that** the device, particularly the shaft, has a hole for a fastening element.

12. Device according to one of the previous claims, **characterised in that** the device, particularly the shaft, has a seat for a head of a fastening element.

13. Device according to one of the previous claims, **characterised in that** the seat has a support for a head of a fastening element.

14. Device according to one of the previous claims, **characterised in that** a transition from the support to the seat is made in the shape of a truncated cone.

15. Device according to one of the previous claims, **characterised in that** the hole or the seat has a drain, particularly a drainage opening and/or a drainage channel.

## Revendications

1. Dispositif destiné à fixer un premier objet sur un second objet dans une direction de fixation, comportant une butée (120) pour supporter le premier objet dans la direction de fixation, dans lequel la butée (120) comporte une surface de contact (130) pour un contact de la butée avec le premier objet, et comportant au moins un corps de support (140) pour supporter le premier objet transversalement à la direction de fixation, dans lequel ledit au moins un corps de support (140) fait saillie à partir de la surface de contact (130), **caractérisé en ce que** ledit au moins un corps de support (140) fait saillie de manière inclinée par rapport à la direction de fixation.

2. Dispositif selon la revendication 1, **caractérisé en ce que** ledit au moins un corps de support (140) fait saillie à partir de la surface de contact (130) de manière inclinée par rapport à une normale à la surface de contact (130).

3. Dispositif selon la revendication 1, **caractérisé en ce que** ledit au moins un corps d'appui (140) fait saillie à partir de la surface de contact (130) en direction d'une normale à la surface de contact (130).

4. Dispositif selon l'une des revendications précédentes, **caractérisé en ce que** le dispositif comporte en outre une tige qui fait saillie en particulier dans la direction de fixation à partir de la butée (120) spécifiquement configurée sous forme de tête.

5. Dispositif selon l'une des revendications précédentes, **caractérisé en ce que** ledit au moins un corps de support (140) doit être incliné sur la tige.

6. Dispositif selon l'une des revendications précédentes, **caractérisé en ce que** ledit au moins un corps de support (140) est incliné en s'éloignant d'un bord extérieur de la butée.

7. Dispositif selon l'une des revendications précédentes, **caractérisé en ce que** la surface de contact (130) est plane.

8. Dispositif selon l'une des revendications précédentes, **caractérisé en ce que** la surface de contact (130) est en particulier incurvée de manière concave.

9. Dispositif selon l'une des revendications précédentes, **caractérisé en ce qu'**une transition de la tige à la butée (120) est configurée de manière tronconique.

10. Dispositif selon l'une des revendications précédentes, **caractérisé en ce que** la tige comporte, sur son extrémité opposée à la butée (120), une pointe en particulier munie de nervures de renfort.

11. Dispositif selon l'une des revendications précédentes, **caractérisé en ce que** le dispositif, en particulier la tige, comporte un trou traversant pour un élément de fixation.

12. Dispositif selon l'une des revendications précédentes, **caractérisé en ce que** le dispositif, en particulier la tige, comporte un logement pour une tête d'un élément de fixation.

13. Dispositif selon l'une des revendications précédentes, **caractérisé en ce que** le logement comporte une butée pour une tête d'un élément de fixation.

14. Dispositif selon l'une des revendications précédentes, **caractérisé en ce qu'**une transition de la butée au logement est configurée de manière tronconique.

15. Dispositif selon l'une des revendications précédentes, **caractérisé en ce que** le trou traversant ou le logement comporte un drain, en particulier une ouverture d'écoulement et/ou un canal d'écoulement.
